**Europäisches Patentamt**

**European Patent Office**

**Office européen des brevets**

(11) Veröffentlichungsnummer: **0 154 722**
**B1**

(12) # EUROPÄISCHE PATENTSCHRIFT

(45) Veröffentlichungstag der Patentschrift:
**25.11.87**

(51) Int. Cl.⁴: **G 03 B 27/73**

(21) Anmeldenummer: **84116397.5**

(22) Anmeldetag: **27.12.84**

(54) **Eichvorrichtung für Colorprinter sowie Verfahren zu deren Betrieb.**

(30) Priorität: **21.02.84 CH 836/84**

(43) Veröffentlichungstag der Anmeldung:
**18.09.85 Patentblatt 85/38**

(45) Bekanntmachung des Hinweises auf die Patenterteilung:
**25.11.87 Patentblatt 87/48**

(84) Benannte Vertragsstaaten:
**AT BE DE FR GB IT NL SE**

(56) Entgegenhaltungen:
**DE-A-2 246 544**
**DE-A-3 007 862**
**US-A-3 293 033**
**US-A-4 174 173**

(73) Patentinhaber: **MERCHANDISING INTERNATIONAL S.A., 1, rue Pédro- Meylan, CH- 1211 Genf 17 (CH)**

(72) Erfinder: **Grossman, Walter, Dr., Wettsteinstrasse 59, CH- 8332 Russikon (CH)**

(74) Vertreter: **Patentanwälte Beetz sen. - Beetz jun. Timpe - Siegfried - Schmitt- Fumian, Steinsdorfstrasse 10, D-8000 München 22 (DE)**

LIBER, STOCKHOLM 1987

EP 0 154 722 B1

## Beschreibung

Die Erfindung betrifft eine Vorrichtung zur Eichung von Colorprintern sowie ein Verfahren zu deren Betrieb. Zum Zwecke der Kopie von Farbfilmen auf photographisches Farbpapier werden Color Printer verwendet, die in einer verbreiteten Ausführungsform die Durchlässigkeit der Vorlage, Farbnegativ oder Farbdiapositiv, grossflächig ausmessen und daraus in einer Rechnerschaltung die für eine gute Kopie notwendigen Belichtungsdaten berechnen. Erst nach Ablauf dieser Mess- und Berechnungsphase öffnet sich der Verschluss und die eigentliche Belichtung wird ausgeführt. Ein Printer dieser Art ist z. B. in der deutschen Offenlegungsschrift 2823 883 beschrieben, wobei die gedankliche Trennung des Printers in einen Densitometerteil, der die Ausmessung der Vorlage vornimmt und in einen Belichtungsteil, der die Belichtung ausführt, deutlich zum Ausdruck kommt. Diese beiden Teile sind allerdings dadurch miteinander verknüpft, dass das gleiche Beleuchtungssystem sowohl für die Messung, als auch für die Belichtung verwendet wird.

Zur Eichung von Farbvergrößerern wurde bereits vorgeschlagen (DE-A-3007 862) statt des Referenznegativs ein Neutralfilter zu verwenden, um unabhängig von der Maskierung des Referenznegativs zu sein.

Die nachstehend beschriebene Erfindung befasst sich mit einem wichtigen Teilaspekt der Printerfunktion, nämlich mit der Eichung des Printers. In jedem Printer wird davon ausgegangen, dass von einer zweckmässigen Referenzvorlage erst einmal ein gutes Bild hergestellt wird. Dabei müssen zum erstenmal durch mehrere Versuche mit verschiedenen Belichtungszeiten diejenigen Belichtungsdaten gefunden werden, die zu einem guten Bild führen. Wenn weitere Vorlagen kopiert werden sollen, werden aus der Differenz der Vorlagendichte zur Referenzdichte die neuen Belichtungszeiten in den drei Spektralbereichen Rot, Grün und Blau ermittelt.

Es sei: $D_{NR}$ die Dichte der Referenzvorlage für rotes Licht,

$E_{NR}$ die Belichtung (Exposition) mit rotem Licht, die zu einem guten Bild führt.

$D_R$ die Dichte der zu kopierenden Vorlage.

Die Belichtung $E_R$ für diese Vorlage ist dann:

$$E_R = E_{NR} + S \cdot (D_R - D_{NR})$$

S ist dabei der sogenannte Slope-Faktor, der die verschiedenen Nichtlinearitäten des Systems ausgleicht, er ist normalerweise etwas grösser als 1 (ca. 1.2).

Die gleiche Rechnung kann für die beiden weiteren Belichtungen mit grünem und blauem Licht durchgeführt werden.

Diese Rechnung ist stark vereinfacht, doch stellt sie die Grundlage aller Printer dar. Eine komplexere Rechnung, die auch die wünschbare Farbunterkorrektur berücksichtigt, ist in der erwähnten Offenlegungsschrift 28 23 883 zu finden.

Aus dem bisher Gesagten geht hervor, dass der Referenzvorlage für die Belichtungsbestimmung eine grosse Bedeutung zukommt. Ist die Produktion von ungenügender Qualität, so wird unter gleichen Bedingungen zuerst eine Kopie der Referenzvorlage gemacht und das Resultat mit einer früher hergestellten Referenzkopie verglichen. Is dieses Resultat auch nicht innerhalb der festgelegten Toleranz, so werden die Belichtungsdaten so lange verändert, bis von der Referenzvorlage eine dem Referenzbild entsprechende Kopie entsteht.

Die Konstanz der Messung hängt im wesentlichen von 3 Faktoren ab: Lichtquelle, Referenz und Sensoren. Die elektrischen Lampen vom Halogen-Typ zeigen über ihre Lebensdauer Alterungserscheinungen, da sich das während des Betriebs verdampfende Wolfram auf dem Glühfaden in der Form von Spitzen absetzen kann, die unter Umständen einzelne Wendel kurzschliessen können. Auch andere Alterungserscheinungen treten auf.

Eine wesentliche Fehlerquelle stellt der als Referenz verwendete Film dar, da dieser mit der Zeit ausbleicht und auch durch den Gebrauch verkratzt wird.

Die Sensoren sind heute relativ stabil, sie sind aber immer in einem gewissen Grade temperaturempfindlich. Ausserdem können auch die nachgeschalteten Verstärker unstabil sein.

Der Erfindung liegt die Aufgabe zugrunde eine Vorrichtung zu schaffen, mit der die Eichung unabhängig von einem als Referenz verwendeten Film vorgenommen werden kann, wodurch dessen vorstehend genannte Nachteile vermieden werden.

Dies wird durch eine Vorrichtung erreicht, welche gekennzeichnet ist durch ein der durchschnittlichen Dichte der zu verarbeitenden Transparentvorlagen entsprechendes licht- und wärmebeständiges, kratzfestes Referenzfilter, welches in den Strahlengang vor der Belichtungsmesseinrichtung des Colorprinters führbar ist und eine Steueranordnung zum zweitweiligen Einführen des Referenzfilters in den Strahlengang und zur Steuerung des Colorprinters beim Eichvorgang.

Die Verwendung eines licht- und wärmebeständigen Referenzfilters ergibt eine vollständig stabile Referenz, welche ständig im Colorprinter angeordnet sein kann. Damit ist eine häufige und handhabungmässig vereinfachte Eichung ermöglicht.

Ferner zeigt die Erfindung ein Verfahren zum Betrieb der Vorrichtung, welches dadurch gekennzeichnet ist, dass das Referenzfilter durch die Steueranordnung in den Strahlengang gebracht wird, durch die Belichtungsmesseinrichtung des Colorprinters die Dichten des Referenzfilters in mehreren Spektralbereichen gemessen und die Messwerte mit gespeichern Sollwerten verglichen werden und abhängig vom Vergleich die Intensität und/oder Färbung der Lichtquelle des Colorprinters zur Kompensation der Ist/Sollwertabweichungen verändert wird.

Bei einer Ausführungsart des Verfahrens kann zudem erkannt werden, ob die Messeinrichtung des Colorpprinters fehlerhaft arbeitet, da die Lichtquelle für die hintereinander vorgenommenen Meßschritte als konstant angenommen werden kann und auch das Referenzfilter vollständig stabil ist. Auftretende Messwertdifferenzwerte, welche ausserhalb eines Toleranzbereichs liegen, weisen deshalb auf eine fehlerhafte Messeinrichtung hin.

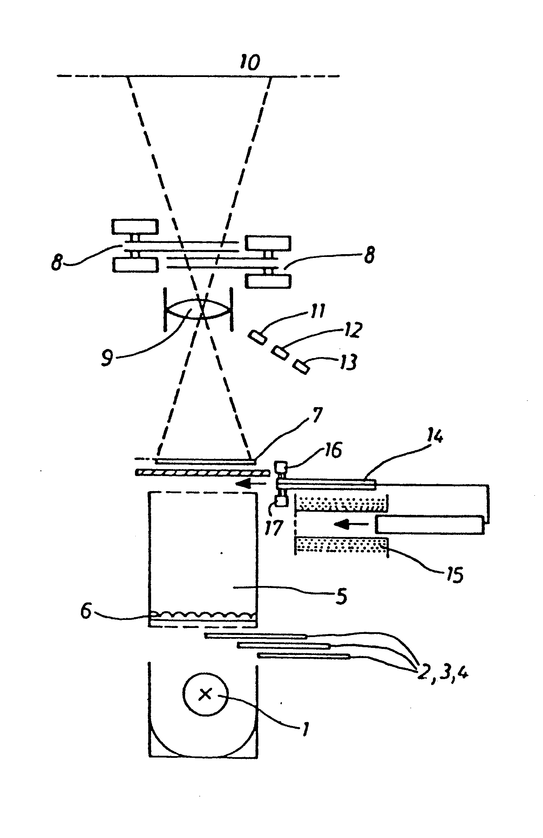

Nachstehend werden Ausführungsbeispiele anhand der Figur näher beschrieben. Dabei zeigt die Figur eine schematische Ansicht eines Colorprinters mit der erfindungsgemässen Vorrichtung. Die schematische Darstellung eines Kopiersystems ist in der Figur abgebildet. Die grundlegenden Elemente sind eine Kopierlichtquelle 1, einschiebbare Farbfilter 2,3,4 zur Anpassung der Kopierlichtfärbung an die Anforderungen des Kopiermaterials, ein Spiegelschacht 5 zur Durchmischung des Lichtes, ein Diffusor 6, eine Vorlage (Farbnegativ oder Diapositiv) 7, ein Verschlussystem 8, eine Abbildungsoptik 9 und eine Papierbahn 10. Zur Messung der Transparenz der Vorlage dienen mindestens 3 Sensoren 11, 12, 13, die in je einem der Spektralbereiche Rot, Grün und Blau empfindlich sind.

Die Steueranordnung ist in der schematischen Darstellung nur teilweise gezeigt.

Das Referenzfilter besteht hier aus einer Kombination von zwei in der Masse eingefärbten Gläsern. Die Referenz sollte in der Dichte möglichst der Durchschnittsdichte der meistkopierten Filme entsprechen. In diesem Fall wird auf den Film Kodacolor 2 abgestellt, der bei Normalbelichtung ungefähr die folgenden Dichten aufweist

Rot  D = 0,65
Grün  D = 1,08
Blau  D = 1,38

Diese Dichtewerte werden mit zwei Glasfiltern erreicht, von denen das erste, ein Braunglas FG 9 der Firma Schott, Mainz, die Maskenfärbung ersetzt, das zweite, ein Neutralglas NG 4, die Gesamtdichte auf den benötigten Wert bringt.

In der Ausführungsform wird ein 2mm starkes Filter FG 9 mit einem 1,2mm starken Filter NG4 kombiniert. Diese Filter sind absolut lichtbeständig. Die Gesamtdichte der Kombination ist

Rot  D = 0,7
Grün  D = 1,06
Blau  D = 1,36

Es wäre auch möglich, das Referenzfilter als Kombination eines Braunglases mit einem feinen Schwarz-Weiss Raster zu bilden, wobei das Raster auf das Braunglas selbst oder auf einem separaten, durchsichtigen Träger aufgebracht

sein kann. Auch ein Lochblech mit zahlreichen feinen Löchern. (ca. 1/4 der Fläche durchlässig) kann das Grauglas ersetzen.

Die Verwendung einer Referenz, die dem Durchschnitt der Farbdichten der kopierten Filme entspricht, ergibt die besten Ergebnisse, da infolge von Nichtlinearitäten des Kopiersystems die möglichen Abweichungen umso grösser werden, je weiter die gemessenen Vorlagedichten von der zur Eichung verwendeten Referenzdichte entfernt sind.

Das Referenzfilter aus Glas hat in der hier beschriebenen Ausführung ein Gewicht von 20g bei Abmessungen von 50x50 mm; es wird deshalb durch einen Zugmagneten der Steueranordnung in die Meßstellung gebracht. Das Filter ist der Figur mit 14 bezeichnet, der Zugmagnet mit 15. Damit auch keine Beeinflussung der Messung durch abgelagerten Staub auftreten kann, fährt das Filter beim Einschieben zwischen den Bürsten 16 und 17 durch. Die Kalibration erfolgt bei Betriebsaufnahme oder auch während der Arbeit durch Betätigung einer Eichtaste. Die folgende Eich-Routine läuft dann automatisch ab:

1. Die Sensoren messen die Beleuchtung ohne eingeschobene Referenz und geben die Werte an den Belichtungsrechner weiter. Diese Werte werden in der üblichen Weise in Dichtewerte umgewandelt ( = Logarithmus des Kehrwertes der Beleuchtungsstärke) und als $D_{ØR}$, $D_{ØG}$ und $D_{ØB}$ gespeichert.

2. Das Referenzfilter wird automatisch eingefahren und die Messung wird wiederholt. Die gemessenen Werte sind $D_{NR}$, $D_{NG}$, $D_{NB}$.

3. Die Differenzen $D_{NR}$-$D_{ØR}$, $D_{NG}$-$D_{ØG}$, $D_{NB}$-$D_{ØB}$ werden gebildet und mit gespeicherten Sollwerten verglichen. Liegen sie im Toleranzbereich, so wird das Sensorsystem als stabil erkannt.

Diese Unterschiede sollten auch bei geringen Abweichungen der Lampenhelligkeit konstant sein, wenn das Sensorsystem richtig arbeitet. Abweichungen werden angezeigt.

4. Die Differenzen der drei Referenzmessungen zu den gespeicherten Sollwerten, die bei der ersten Eichung des Geräts festgehalten worden sind, werden auf einer Digitalanzeige sichtbar gemacht.

5. Falls Abweichungen vorliegen, wird über die Einstellung der Lampenspannung bzw. durch Einschieben oder Herausziehen der Farbfilter die Lichtqualität so verändert, dass die Abweichungen verschwinden.

8. Eine Belichtung auf Papier wird ausgeführt, deren Resultat dann eine fast graue Fläche auf der Kopie ergibt, die täglich gemessen und kontrolliert werden kann.

Es ist natürlich möglich, mit zusätzlichem elektrischem und mechanischem Aufwand die Stufe 5 zu automatisieren. In der vorliegenden Ausführungsform wurde das aber nicht gemacht, da die manuelle Nachführung bei dauernder Anzeige der Differenz Istwert minus Sollwert sehr einfach zu machen ist.

Die Verwendung einer absolut stabilen Referenz und die Abstimmung des Lichtes zur Erreichung einer immer konstanten Beleuchtungsstärke macht es möglich, für eine Anzahl gleichartiger Printer die Eichwerte für verschiedene Filmtypen mit einem Printer zu bestimmen und auf die anderen Printer zu übertragen. Damit diese Einstellung funktioniert, werden Abweichungen in der Papierempfindlichkeit und der Papierslope in entsprechenden Speichern für Papierparameter abgelegt. Abweichungen der Entwicklung werden in einem sog. Master-Speicher kompensiert, der allen übrigen Speichern überlagert ist. Dieses System setzt selbstverständlich voraus, dass die Sensorempfindlichkeiten der einzelnen Printer weitgehend übereinstimmen. Alle Speicherwerte für zu kopierende Filmtypen beziehen sich dann auf die Referenzdichte des eingebauten Referenzfilters und können als Differenzen zu dieser Referenzdichte aufgefasst werden. Diese Differenzen entstehen deshalb, weil die Sensoren die Farbdichten der Vorlagen nicht in der gleichen Art bewerten wie die einzelnen Schichten des Farbpapiers. Obwohl ein Negativ auf Film A z. B. die gleichen Messwerte ergeben kann wie ein Negativ auf Film B, können zur Herstellung einer guten Papierkopie verschiedene Belichtungen notwendig sein. Diese Zuordnung Belichtung zu Messung ist in sogenannten Filmspeichern abgelegt. Zur Kontrolle dieser Speicher kann jeweils eine Kopie des Referenzfilters auf Papier gemacht werden. Für jeden Speicher ergibt sich dann eine etwas veränderte Färbung und Dichte der Graufläche, doch sollten diese Resultate von Tag zu Tag und auch von Printer zu Printer übereinstimmen.

Das beschriebene Verfahren erlaubt eine einfache Kontrolle der Printerresultate und ergibt damit eine konstante Qualität der Produktion. Es macht unabhängig von Testfilmen, die eine geringe Stabilität aufweisen und deshalb nicht die gleiche Konstanz zu erreichen erlauben, die mit der beschriebenen Vorrichtung erreicht werden kann. Lediglich zur Slope-Kontrolle werden Negative auf Film benötigt, doch kann in digital arbeitenden Printern mit einer sehr guten Konstanz der Slope-Einstellung gerechnet werden.

**Patentansprüche**

1. Vorrichtung zur Eichung von Colorprintern, gekennzeichnet durch ein der durchschnittlichen Dichte der zu verarbeitenden Transparentvorlagen entsprechendes licht- und wärmbeständiges, kratzfestes Referenzfilter (14), welches in den Strahlengang vor der Belichtungsmesseinrichtung (11-13) des Colorprinters führbar ist und eine Steueranordnung zum zeitweiligen Einführen des Referenzfilters in den Strahlengang und zur Steuerung des Colorprinters beim Eichvorgang.

2. Vorrichtung nach Anspruch 1, dadurch gekennzeichnet, dass das Referenzfilter (14) aus mindestens zwei Elementen besteht, von denen das erste im wesentlichen den spektralen Verlauf der Lichtabsorption der Transparentvorlage nachbildet und das zweite im wesentlichen den über das gesamte Belichtungsspektrum gleichmässigen Absorptionsanteil hinzufügt.

3. Vorrichtung nach Anspruch 2, dadurch gekennzeichnet, dass das erste Element von einem in der Masse eingefärbten Braunglas, das zweite Element von einem Neutralglas gebildet wird.

4. Vorrichtung nach Anspruch 2, dadurch gekennzeichnet, dass das erste Element von einem in der Masse eingefärbten Braunglas, das zweite Element von einem auf das Braunglas aufgebrachten-Schwarz-Weiss Raster gebildet wird.

5. Vorrichtung nach Anspruch 2, dadurch gekennzeichnet, dass das erste Element durch ein in der Masse eingefärbtes Braunglas, das zweite Element durch ein Lochblech gebildet wird.

6. Vorrichtung nach Anspruch 1, dadurch gekennzeichnet, dass die Steueranordnung zur Steuerung der Belichtungsmesseinrichtung (11-13) und der Lichtquelle (1) des Colorprinters ausgestaltet ist.

7. Vorrichtung nach Anspruch 1 oder 6, dadurch gekennzeichnet, dass die Steueranordnung zur Speicherung von Mess- und Sollwerten und zur Anzeige von Messwerten und/oder Messwertdifferenzen aus der Belichtungsmesseinrichtung (11-12) des Colorprinters ausgestaltet ist.

8. Vorrichtung nach einem der vorstehenden Ansprüche, dadurch gekennzeichnet, dass die Steueranordnung eine Reinigungseinrichtung (16,17) aufweist, welche das Referenzfilter (14) bei der Einführung in den Strahlengang und/oder der Wegführung aus dem Strahlengang von Staub und anderen Fremdkörpern befreit.

9. Verfahren zum Betrieb der Vorrichtung nach Anspruch 1, dadurch gekennzeichnet, dass das Referenzfilter durch die Steueranordnung in den Strahlengang gebracht wird, durch die Belichtungsmesseinrichtung des Colorprinters die Dichten des Referenzfilters in mehreren Spektralbereichen gemessen und die Messwerte mit gespeicherten Sollwerten verglichen werden und abhängig vom Vergleich die Intensität und/oder Färbung der Lichtquelle des Colorprinters zur Kompensation der Ist/Sollwertabweichungen verändert wird.

10. Verfahren nach Anspruch 9, dadurch gekennzeichnet, dass durch die Steueranordnung eine zusätzliche Messwertbildung zur Fehlererkennung durchgeführt wird, wobei eine Messung in den Spektralbereichen ohne eingeführtes Referenzfilter vorgenommen wird, die Differenzwerte dieser Messwerte zu den Messwerten mit eingeführtem Referenzfilter gebildet und mit gespeicherten Sollwerten verglichen werden und bei Überschreitung eines vorbestimmten Toleranzwertes eine Fehleranzeige des Colorprinters aktiviert wird.

## Claims

1. Apparatus for calibrating colour printers, characterised by a light-resistant and heat-resistant scratch-proof reference filter (14) corresponding to the average density of the transparent originals for processing, said reference filter being adapted to be brought into the ray path in front of the colour printer exposure measuring system (11-13) and a control arrangement for temporarily bringing the reference filter into the ray path and for controlling the colour printer during the calibration process.

2. Apparatus according to claim 1, characterised in that the reference filter (14) consists of at least two elements, the first of which simulates substantially the spectral curve of the light absorbtion of the transparent original and the second adds substantially the absorption fraction which is uniform over the entire exposure spectrum.

3. Apparatus according to claim 2, characterised in that the first element is formed by a brown glass which is dyed in the mass and the second element is formed by a neutral glass.

4. Apparatus according to claim 2, characterised in that the first element is formed by a brown glass dyed in the mass and the second element by a black and white raster applied to the brown glass.

5. Apparatus according to claim 2, characterised in that first element is formed by a brown glass dyed in the mass and the second element by a perforate metal sheet.

6. Apparatus according to claim 1, characterised in that the control arrangement is adapted to control the exposure measuring system (11-13) and the light source (1) of the colour printer.

7. Apparatus according to claim 1 or 6, characterised in that the control arrangement is adapted to store measurements and set-values and to indicate measurements and/or measurement differences from the colour printer exposure measuring system (11-12).

8. Apparatus according to any one of the preceding claims characterised in that the control arrangement comprises a cleaning system (16,17) which removes any dust and other foreign bodies from the reference filter (14) when the latter is brought into and/or moved away from the ray path.

9. A method of operating the apparatus according to claim 1, characterised in that the reference filter is brought into the ray path by the control arrangament, the densities of the reference filter are measured by the exposure measuring system in a number of spectral zones and the measurements are compared with stored set-values and depending upon the comparison the intensity and/or colouring of the colour printer light source is changed to compensate for the deviations between the actual value and the set-value.

10. A method according to claim 8, characterised in that the control arrangement performs an additional measurement formation for error detection, a measurement being carried out in the spectral ranges without the reference filter being introduced, the differences between these measurements are formed into measurements with the reference filter introduced and are compared with stored set-values and if a predetermined tolerance value is exceeded an error display of the colour printer is activated.

## Revendications

1. Dispositif pour l'étalonnage de tireuses en couleurs, caractérisé par un filtre de référence (14) résistant à la lumière et à la chaleur, résistant aux rayures, correspondant à la donsité moyenne des orginaux transparents à traiter, qui peut être amené dans le trajet des rayons devant le posemètre (11 à 13) de la tireuse en couleurs et une disposition de commande pour l'introduction temporaire du filtre de référence dans le trajet des rayons et pour commande de la tireuse en couleurs lors du processus d'étalonnage.

2. Dispositif selon la revendication 1, caractérisé par le fait que le filtre de référence (14) est formé d'au moins deux éléments dont le premier repioduit pratiquement l'allure spectrale de l'absorption de lumière de l'original transparent et le deuxième ajoute pratiquement la fraction d'absorption, uniforme sur tout le spectre d'exposition.

3. Dispositif selon la revendication 2 caráctérisé par le fait que le premier élément est formé par un verre brun coloré dans la masse, lo deuxième élément par un verre neutre.

4. Dispositif selon la revendication 2, caractérisé risé par le fait que le premier élément est formé par un verre brun coloré dans la masse, le deuxième élément par un réseau noir-blanc appliqué sur le verre brun.

5. Dispositif selon la revendication 2, caractérisé par le fait que le premier élément est formé par un verre brun coloré dans la masse et le deuxième élément par une plaque perforée.

6. Dispositif selon la revendication 1, caractérisé par le fait que la disposition de commande est aménagée pour commander le posemètre (11 à 13) et la source lumineuse (1) de la tireuse en couleurs.

7. Dispositif selon l'une des revendications 1 et 6, caractérisé par le fait que la disposition de commande est aménagée pour mémoriser des valeurs mesurées et dos valeurs de consigne et pour afficher des valeurs mesurées et/ou des différences de valeurs mesurées provenant du posemètre (11, 12) de la tireuse en colours.

8. Dispositif selon l'une des revendications 1 à 7, caractérisé par le fait que la disposition de commando présente un dispositif de nettoyage (16, 17) qui débarrasse le filtre de référence (14) de poussière et d'autres corps étrangers lorsqu'on l'introduit dans le trajet des rayons et/ou lorsqu'on le retire du trajet des rayons.

9. Procédé pour le fonctionnement du dispositif selon la revendication 1, caractérisé par le fait que le filtre de référence est amené par la disposition de commande dans le trajet des rayons, que par le posemètre de la tireuse en couleurs, les densités du filtre de référence dans plusieurs domaines spectraux sont mesurées et que les valeurs mesurées sont comparées à des valeurs de consigne mémorisées et que sous la dépendance de la comparaison, l'intenisité et/ou la coloration de la source lumineuse de la tireuse en couleurs sont modifiées pour la compensation des écarts entre valeurs instantanées et de consigne.

10. Procédé selon la revendication 9, caractérisé par le fait que la disposition de commande effectue une formation supplémentaire de valeur mesurée pour la reconnaissance d'erreurs en effectuant une mesure dans les domaines spectraux sans filtre de référence inséré, qu'il forme les différences entre ces valeurs mesurées et les valeur mesurées avec filtre de référence inséré, et la compare à des valeurs de consigne mémorisées et qu'en cas de dépassement d'une valeur de tolérance prédéterminée, une indication d'erreur de la tireuse en couleurs est activée.